Europäisches Patentamt

European Patent Office

Office européen des brevets

(11) Publication number:     **0 171 882**
                          **B1**

(12)            **EUROPEAN PATENT SPECIFICATION**

(45) Date of publication of patent specification: 25.01.89      (51) Int. Cl.⁴: **F 02 B 41/10,** F 02 B 67/00,
                                                                          F 02 B 37/00

(21) Application number: 85303987.3

(22) Date of filing: 05.06.85

(54) Turbocompound engine having power turbine output connected to the timing gear.

(30) Priority: 13.07.84 US 630565
          14.09.84 PCt/us84/01465

(43) Date of publication of application:
          19.02.86 Bulletin 86/08

(45) Publication of the grant of the patent:
          25.01.89 Bulletin 89/04

(84) Designated Contracting States:
          BE CH DE FR GB IT LI SE

(56) References cited:
          DE-A- 952 851
          FR-A- 471 200
          GB-A- 866 017
          GB-A-2 082 682
          US-A-1 520 942
          US-A-3 050 932
          US-E- 15 769

(73) Proprietor: CATERPILLAR INC.
          100 Northeast Adams Street
          Peoria Illinois 61629-6490 (US)

(72) Inventor: Wilson, Donald E.
          10217 North Spring Lane
          Peoria Illinois 61615 (US)

(74) Representative: Brunner, Michael John et al
          GILL JENNINGS & EVERY 53-64 Chancery Lane
          London WC2A 1HN (GB)

Courier Press, Leamington Spa, England.

## Description

This invention relates generally to engines and more particularly to turbo-compound engines.

The struggle to increase efficiency of internal combustion engines is a constant endeavour of engineers. Turbo-compound engines have been known for many years. GB-A-866017 discloses an engine including a crankshaft, a camshaft, a plurality of timing gears drivingly connecting the crankshaft with the camshaft, a turbocharger driven by exhaust from the engine, a turbine also positioned in the flow path of the exhaust to be driven thereby, and a driving connection transmitting power from the turbine to the crankshaft. US-E-15769 discloses a turbocharged engine in which the turbine is connected to the rear of the crankshaft.

The turbo-compound engines of the past have recovered power from the exhaust and transmitted this back into the engine through the flywheel. The flywheel normally has a pressed-on starter or ring gear which is used to transmit power from the starter to the crankshaft to start the engine. The loads and forces input to this gear are low and infrequent in nature, and therefore do not require a strong gear of accurate tooth profile. The backlash and tooth contact surface of the starter and ring gear are of a low quality due to their short contact times and infrequent loading. Analysis has shown that failure would occur causing the engine to malfunction if the power was transmitted through the existing gear teeth on the flywheel starter gear. For this reason the ring gear requires a new tooth design. This new tooth design is more costly and requires a major change.

Another drawback of feeding power back into the flywheel or rear of the engine comes into play when servicing of the components is required. The flywheel and connecting components are buried under structural members and are difficult to service. For example, in an on-highway truck the rear of the engine is located under the cab and in many cases above the axle and front suspension system. Power take-offs and other accessories also in this immediate area further restrict accessibility to the power input from the turbo-compound portion of the engine. DE-C-952851 discloses a turbine which is located in the cylinder-head of an engine and which drives the crankshaft through a rotary slide valve of the cylinders.

The present invention is directed to overcoming one or more of the problems as set forth above.

According to the present invention, there is provided a turbo-compound engine including:

a crankshaft;

a camshaft;

a plurality of timing gears adjacent one end of the engine and drivingly connecting the crankshaft with the camshaft;

a turbocharger driven by the engine exhaust and;

a turbine positioned in the flow path of the exhaust exiting the turbocharger to be driven thereby, characterized by:

power transmission means for transmitting power from the turbine to the crankshaft through a gear meshing with one of the timing gears, said means and said turbine being positioned at one side of the engine between its ends, the power transmission means including a driving mechanism connected to the turbine, a fluid coupler mechanism connected to the driving mechanism and means for connecting the fluid coupler mechanism to said gear meshing with one of the timing gears.

The turbo-compound engine of the present invention overcomes the problem of inadequate gear design by feeding the recovered power from the exhaust back into the existing and structurally sound timing gears. Unlike conventional turbo-compound engines which feed recovery exhaust energy into the flywheel at the back of the engine, the components of this invention are near the front of and alongside the engine above the centre, allowing for ease of service and maintenance.

Two examples of turbo-compound engines according to the invention will now be described with reference to the accompanying drawings, in which:

Fig. 1 is a side elevational view of a first embodiment, having portions broken out for illustrative convenience;

Fig. 2 is a sectional view of the bearing arrangement of the mechanism shown in Fig. l; and

Fig. 3 is a diagrammatic portion of the side elevational view of a second embodiment.

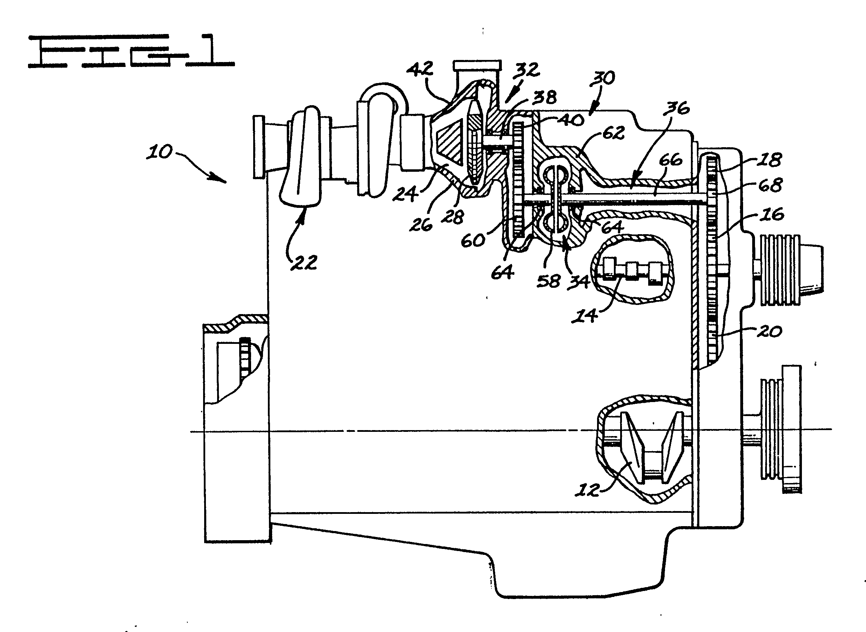

An engine 10 which is illustrated in Figure 1 has a primary portion of conventional design and includes a crankshaft 12, a camshaft 14, and a plurality of timing gears 16,18,20. The timing gears 16,18,20 drivingly connect the crankshaft 12 with the camshaft 14. Gears 16 and 18 are used to drive accessory equipment such as a water pump or a hydraulic pump. The gear 20 is an idler gear for transmitting power between the accessory gears 16,18 and the crankshaft 12. A turbocharger 22 is driven by the exhaust from the engine 10 and its exhaust flows through a passage 24 within a duct 26 and is directed to a turbine 28. The exhaust exiting the turbine 28 is emitted to the atmosphere. The turbine 28 of this example is an axial turbine 28, however, as an alternative the turbine 28 could be of radial design.

The turbine 28 is connected to a means 30 for transmitting power to one of the timing gears 16 and includes a driving mechanism 32 connected to the turbine 28, a fluid coupler mechanism 34 connected to the driving mechanism 32, and a means 36 connecting the fluid coupler mechanism 34 to the gear 16.

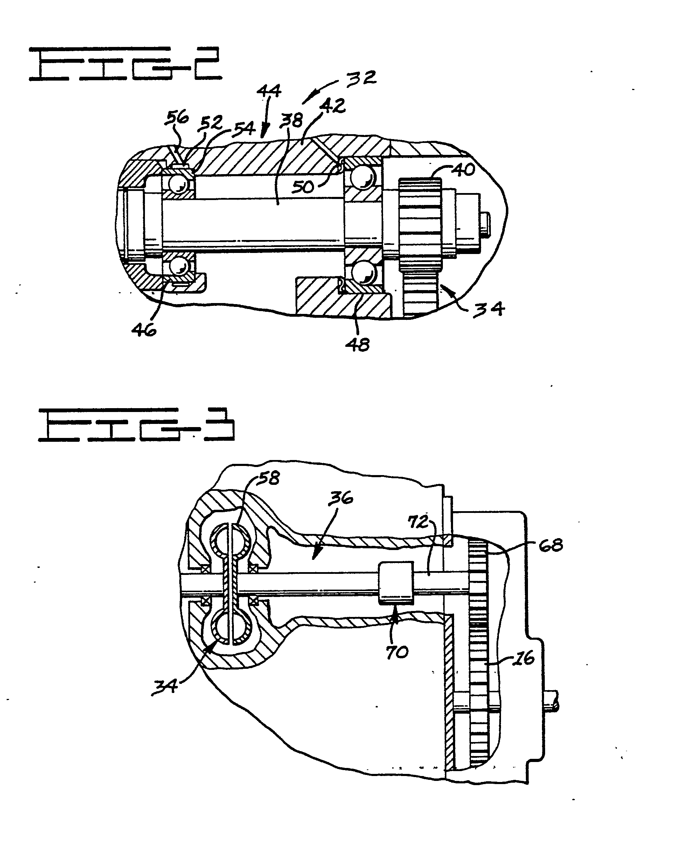

As shown in Fig. 2, the driving mechanism 32 includes a shaft 38 connected at one end to the turbine 28, a gear 40 attached to the other end of the shaft 38 and connected to the fluid coupler mechanism 34, a housing 42 and a means 44 for supporting the shaft in the housing 42. The supporting means 44 includes a pair of roller bearings 46,48 located in the housing 42 and surrounding the shaft 38. One bearing 46 of the pair of bearings 46,48 is located near the turbine 28 and the other bearing 48 is located near the gear 40. The one bearing 46 is supported in the housing 42 by the squeeze film method and the other bearing 48 is secured by the more conventional tolerance fit with respect to the housing 42. A wave washer 50 is located between the bearing 48 and the housing 42.

In the squeeze film method of mounting the one bearing 46 in the housing 42, a space or an annulus 52 is provided between an outer race 54 and the housing 42. Oil is directed into the annulus 52 through a passage 56 and squeezes past the outer race 54 and the housing 42 draining back to the source.

The fluid coupler mechanism 34 includes a fluid coupler 58 of conventional design, a gear 60 attached to one end of the fluid coupler 58 and meshing with the gear 40 of the driving mechanism 32. A housing 62 surrounds the fluid coupler 58 and the gear 60. A pair of bearings 64 located in the housing 62 support the fluid coupler 58 and the gear 60.

The means 36 for connecting the fluid coupler mechanism 34 to the gear 16 includes a shaft 66 connected to the fluid coupler mechanism 34 and a gear 68 attaches to the shaft 66 at the end opposite the fluid coupler mechanism 34. The gear 68 meshes with the water pump accessory drive gear 16.

An alternate embodiment of a turbocompound engine 10 having the power feed into the timing gear 16 of the present invention is disclosed in Fig. 3. It is noted that the same reference numerals of the first embodiment are used to designate similarly constructed counterpart elements of this embodiment. In this embodiment, however, the means 36 for connecting the fluid coupler mechanism 34 includes a clutch mechanism 70 located between the fluid coupler mechanism 34 and the gear 16. The clutch mechanism 70 is a one way clutch. As an alternative to the one way clutch arrangements, a mechanical or electrical clutch can be used. The clutch mechanism 70 is connected to the output end of the fluid coupler 58. A shaft 72 is attached to the output end of the clutch mechanism 70, and the gear 68 attaches to the shaft 72 at the end opposite the clutch mechanism 70. As an alternate to the disclosed embodiment, the output end of the clutch mechanism 70 could be attached to the gear 68 and the shaft 72 could attach the input end of the clutch mechanism 70 to the fluid coupler 58.

The turbocompound engine 10 can be substituted for any conventional engine application such as for use in earthmoving equipment, generator sets, marine applications and on highway trucks. The internal combustion engine exhaust is used to drive a standard turbocharger 22. The heat energy of the exhaust exiting the turbocharger 22 is directed through the passage 24 in the duct 26 to the turbine 28. The exhaust flows through the axial turbine 28 causing the shaft 38 to rotate at a high rate of speed. The rotating shaft 38 transmits the power to the gear 40 which in turn transmits power to the gear 60 attached to the fluid coupler 58. From the fluid coupler 58, the rotational energy is transmitted through the shaft 66 to the gear 68 and to the gear 16 and back through the plurality of timing gears 16,18,20 to the crankshaft 12. Thus, the heat energy of the exhaust which would otherwise be lost is converted to mechanical energy directed back into the timing gears. After the energy has been extracted from the exhaust, the exhaust is discharged to the atmosphere.

The ratio of the shaft gear 38 to the fluid coupler gear 60 causes a speed reduction to occur. The one bearing 46 of the supporting means 40 absorbs transverse vibrations or oscillations of the shaft 38. The wave washer 50 located between the other bearing 48 and the housing 42 establishes a continual preload on the bearings 46,48 and permits snug assembly without the necessity of holding the parts to very close tolerance. The fluid coupler 58 compensates for speed differential and reduces the affect of the torsional vibrations from the engine 10 back to the turbine 28.

Under normal operating conditions of the engine 10, a high amount of exhaust is emitted and drives the turbine 28. Under low speed conditions of the engine 10, the amount of exhaust may not suffice to drive the turbine 28 at a high rate of speed. The engine 10 under these low speed conditions could drive the connecting means 36 through the timing gear 16, feedback through the fluid coupler mechanism 34 and results in driving the turbine 28.

As an alternate embodiment to overcome this shortcoming of this low speed operation, the one-way clutch 70 is added to the connecting means 36. The engine 10 and turbocompound components will be disengaged from each other by the one-way clutch 70 and under the aforementioned conditions the engine 10 will not feed back through the fluid coupler mechanism 34 and result in driving the turbine 28.

The turbocompound engine of this invention uses the existing timing gears 16,18,20 which are already machined and designed for continual load carrying capacity. The compound portion of the turbocompound engine 10 is located near the front and top of the engine 10 allowing for excellent maintenance and serviceability.

**Claims**

1. A turbo-compound engine (10) including:
   a crankshaft (12);
   a camshaft (14);
   a plurality of timing gears (16,18,20) adjacent one end of the engine and drivingly connecting the crankshaft (12) with the camshaft (14);
   a turbocharger (22) driven by the engine exhaust and;
   a turbine (28) positioned in the flow path of the exhaust exiting the turbocharger (22) to be driven thereby, characterized by:

power transmission means (30) for transmitting power from the turbine (28) to the crankshaft (12) through a gear (68) meshing with one of the timing gears (16,18,20), said power transmission means (30) and said turbine (28) being positioned at one side of the engine between its ends, the power transmission means (30) including a driving mechanism (32) connected to the turbine (28), a fluid coupler mechanism (34) connected to the driving mechanism (32) and means (36) for connecting the fluid coupler mechanism (38) to said gear (68) meshing with one of the timing gears (16,18,20).

2. An engine (10) according to claim 1, wherein the turbine (28) is an axial turbine (30).

3. An engine (10) according to claim 1 or claim 2, wherein the connecting means (36) includes a shaft (66) connected to the fluid coupler mechanism (34), the gear (68) being attached to the shaft (66) at the end opposite the fluid coupler mechanism (34).

4. An engine (10) according to any of the preceding claims, wherein the connecting means (36) includes a clutch mechanism (70) located between the fluid coupler mechanism (34) and said one of the timing gears (16,18,20).

5. An engine (10) according to claim 4, wherein the clutch mechanism (70) is a one-way clutch.

6. An engine (10) according to any of the preceding claims, wherein the driving mechanism (32) includes a shaft (38) connected at one end to the turbine (28), a gear (40) attached to the other end of the shaft (38), a housing (42), and means (44) for supporting the shaft (38) in the housing (42).

7. An engine (10) according to claim 6, wherein the means (44) for supporting the shaft (38) in the housing (42) includes a pair of roller bearings (46,48).

8. An engine (10) according to claim 7, wherein one (46) of the pair of bearings is located near the turbine (28) and the other bearing (48) is located near the gear (40), the one bearing (46) being supported in the housing (42) by the squeeze film method, and the supporting means (44) includes a wave washer (50) located between the other bearing (48) and the housing (42).

9. An engine (10) according to any of the preceding claims, wherein the fluid coupler mechanism (34) includes a fluid coupler (58), a gear (60) attached to one end of the fluid coupler (58) and connected to the driving mechanism (32), a housing (62) surrounding the fluid coupler (58) and the gear (60), and a pair of bearings (64) located in the housing (62) supporting the fluid coupler (58) and the gear (60).

10. An engine (10) according to any of the preceding claims, wherein said one of the timing gears is an accessory water pump gear (16).

## Patentansprüche

1. Verbundturbomaschine (10), die folgendes aufweist:

eine Kurbelwelle (12),

eine Nockenwelle (14),

eine Vielzahl von Zeitsteuerzahnrädern (16, 18, 20) benachbart zu einem Ende der Maschine und antriebsmäßig die Kurbelwelle (12) mit der Nockenwelle (14) verbindend,

einen Turbolader (22) angetrieben durch die Maschinenabgase und

eine Turbine (28) positioniert im Strömungspfad des aus dem Turbolader (22) austretenden Abgases zum Antrieb dadurch, gekennzeichnet durch:

Leistungsübertragungsmittel (30) zum Übertragen von Leistung von der Turbine (28) auf die Kurbelwelle (12) über ein Zahnrad (68), welches mit einem der Zeitsteuerzahnräder (16, 18, 20) in Eingriff steht, wobei die Leistungsübertragungsmittel (30) und die Turbine (28) an einer Seite der Maschine zwischen deren Enden positioniert ist, und wobei die Leistungsübertragungsmittel (30) einen Antriebsmechanismus (32) aufweisen verbunden mit der Turbine (28), einen Strömungsmittelkopplermechanismus (34) verbunden mit dem Antriebsmechanismus (32) und Mittel (36) zur Verbindung des Strömungsmittelkopplermechanismus (38) mit dem Zahnrad (68) in Eingriff stehend mit einem der Zeitsteuerzahnräder (16, 18, 20).

2. Maschine (10) nach Anspruch 1, wobei die Turbine (28) eine Axialturbine (30) ist.

3. Maschine (10) nach Anspruch 1 oder 2, wobei die Verbindungsmittel (36) eine Welle (66) aufweisen, verbunden mit dem Strömungsmittelkopplermechanismus (34), wobei das Zahnrad (68) an der Welle (66) an dem Ende entgegengesetzt zu dem Strömungsmittelkopplermechanismus (34) befestigt ist.

4. Maschine (10) nach einem der vorhergehenden Ansprüche, wobei die Verbindungsmittel (36) einen Kupplungsmechanismus (70) aufweisen, und zwar angeordnet zwischen dem Strömungsmittelkopplermechanismus (34) und dem erwähnten einen der Zeitsteuerzahnräder (16, 18, 20).

5. Maschine (10) nach Anspruch 4, wobei der Kupplungsmechanismus (70) eine Einwegkupplung ist.

6. Maschine (10) nach einem der vorhergehenden Ansprüche, wobei der Antriebsmechanismus (32) eine Welle (38) aufweist, und zwar verbunden an einem Ende mit der Turbine (28), ferner ein Zahnrad (40) befestigt am anderen Ende der Welle (38), ein Gehäuse (42) und Mittel (44) zum Tragen der Welle (38) im Gehäuse (42).

7. Maschine (10) nach Anspruch 6, wobei die Mittel (44) zum Tragen der Welle (38) im Gehäuse (42) ein Paar von Kugellagern (46, 48) aufweisen.

8. Maschine (10) nach Anspruch 7, wobei eines (46) des Paares von Lagern nahe der Turbine (28) angeordnet ist und das andere Lager (48) nahe dem Zahnrad (40) angeordnet ist, und wobei ein Lager (46) vom Gehäuse (42) getragen wird, und zwar durch das Quetschschichtverfahren, und wobei die Tragmittel (44) eine Wellenunterlegscheibe (50) aufweisen angeordnet zwischen dem anderen Lager (48) und dem Gehäuse (42).

9. Maschine (10) nach einem der vorhergehenden Ansprüche, wobei der Strömungsmittelkopplermechanismus (34) einen Strömungsmittelkoppler (58) aufweist, ein Zahnrad (60) befestigt an einem Ende des Strömungsmittelkopplers (58) und verbunden mit dem Antriebsmechanismus (32), ein Gehäuse (62) den Strömungsmittelkoppler (58) und das Zahnrad (60) umgebend, und ein Paar von Lagern (64) angeordnet im Gehäuse (62) den Strömungsmittelkoppler (58) und das Zahnrad (60) tragend.

10. Maschine (10) nach einem der vorhergehenden Ansprüche, wobei das erwähnte eine der Zeitsteuerzahnräder ein Hilfswasserpumpenzahnrad (16) ist.

## Revendications

1. Turbomoteur compound (10) comportant:
un vilebrequin (12);
un arbre à cames (14);
plusieurs pignons de distribution (16, 18, 20) situés à proximité de l'une des extrémités du moteur et qui accouplent, en vue d'un entraînement, le vilebrequin (12) avec l'arbre à cames (14);
un turbocompresseur (22) entraîné par l'échappement du moteur; et
une turbine (28) placée dans la trajectoire d'écoulement de l'échappement sortant du turbocompresseur (22), pour être entraînée par celui-ci, caractérisé par:
des moyens de transmission d'énergie (30) destinés à transmettre une énergie de la turbine (28) au vilebrequin (12) par l'intermédiaire d'un pignon (68) qui s'engrène avec l'un des pignons de distribution (16, 18, 20), lesdits moyens de transmission d'énergie (30) et ladite turbine (28) étant placés d'un côté du moteur entre ses extrémités, et lesdits. moyens de transmission d'énergie (30) comportant un mécanisme d'entraînement (32) relié à la turbine (28), un mécanisme d'accouplement fluidique (34) relié au mécanisme d'entraînement (32) et des moyens (36) pour relier le mécanisme d'accouplement fluidique (38) audit pignon (68) qui s'engrène avec l'un des pignons de distribution (16, 18, 20).

2. Moteur (10) selon la revendication 1, dans lequel la turbine (28) est une turbine axiale (30).

3. Moteur (10) selon la revendication 1 ou la revendication 2, dans lequel les moyens de liaison (36) comportent un arbre (66) relié au mécanisme d'accouplement fluidique (34), le pignon (68) étant fixé à l'arbre (66), au niveau de l'extrémité de celui-ci opposée au mécanisme d'accouplement fluidique (34).

4. Moteur (10) selon l'une quelconque des revendications précédentes, dans lequel les moyens de liaison (36) comportent un mécanisme d'embrayage (70) intercalé entre le mécanisme d'accouplement fluidique (34) et celui des pignons de distribution (16, 18, 20) qui a été mentionné.

5. Moteur (10) selon la revendication 4, dans lequel le mécanisme d'embrayage (70) est un embrayage unidirectionnel.

6. Moteur (10) selon l'une quelconque des revendications précédentes, dans lequel le mécanisme d'entraînement (32) comporte un arbre (38) relié, au niveau de l'une de ses extrémités, à la turbine (28), un pignon (40) fixé à l'autre extrémité de l'arbre (38), un carter (42), et des moyens (44) pour supporter l'arbre (38) dans le carter (42).

7. Moteur (10) selon la revendication 6, dans lequel les moyens (44) destinés à supporter l'arbre (38) dans le carter (42) comportent une paire de roulements à rouleaux (46, 48).

8. Moteur (10) selon la revendication 7, dans lequel un premier roulement (46) de la paire de roulements est situé à proximité de la turbine (28), tandis que le second roulement (48) est situé à proximité du pignon (40), le premier roulement (46) étant supporté dans le carter (42) par la méthode à film de serrage, et les moyens de support (44) comportant une rondelle ondulée (50) intercalée entre le second roulement (48) et le carter (42).

9. Moteur (10) selon l'une quelconque des revendications précédentes, dans lequel le mécanisme d'accouplement fluidique (34) comporte un organe d'accouplement fluidique (58), un pignon (60) fixé à l'une des extrémités de l'organe d'accouplement fluidique (58) et relié au mécanisme d'entraînement (32), un carter (62) qui entoure l'organe d'accouplement fluidique (58) et le pignon (60), et une paire de roulements (64) situés dans le carter (62), qui supportent l'organe d'accouplement fluidique (58) et le pignon (60). .

l0. Moteur (10) selon l'une quelconque des revendications précédentes, dans lequel le pignon de distribution mentionné est un pignon auxiliaire de pompe à eau (16).

FIG-1

EP 0 171 882 B1

FIG-2

32
44
56 52 54 38 42
40
50
46
48
34

FIG-3

58
36
72
68
70
34
16